Europäisches Patentamt

European Patent Office

Office européen des brevets

(19)

(11) **EP 0 761 620 A1**

(12) **EUROPEAN PATENT APPLICATION**

(43) Date of publication:
12.03.1997 Bulletin 1997/11

(51) Int. Cl.$^6$: **C04B 35/01**, G03G 15/20

(21) Application number: 96113519.1

(22) Date of filing: 23.08.1996

(84) Designated Contracting States:
DE FR GB IT

(30) Priority: 28.08.1995 JP 218649/95

(71) Applicant: KABUSHIKI KAISHA RIKEN
Tokyo (JP)

(72) Inventors:
• Uchiyama, Tetsuo
Kumagaya-shi, Saitama (JP)
• Tsuji, Kenichi
Kumagaya-shi, Saitama (JP)

(74) Representative: Simons, Johannes et al
Cohausz & Florack
Patentanwälte
Kanzlerstrasse 8 A
40472 Düsseldorf (DE)

(54) **Heat-roller and method for production thereof**

(57) A direct heating type heat-roller for fixing a toner image is improved to have more uniform temperature distribution on the cylindrical outer surface. The electrically conductive composite resin for the heat roller essentially consists of insulating ceramics and Si particles, whose purity is 90% or more. Pores in said ceramics are isolate and equiaxed and 20 µm or less in average particle diameter.

*Fig. 2*

EP 0 761 620 A1

Printed by Rank Xerox (UK) Business Services
2.13.16/3.4

## Description

BACKGROUND OF INVENTION

1. Field of Invention

The present invention relates to a self-heat-generating type heat-roller, which is used in a fixing unit provided for fixing the toner image transferred on the paper in an electrophotographic system, such as a copying machine, a facsimile, a printer and the like. The present invention also relates to a self-heat-generating type heat-roller which is provided in an ink-jet type printer to accelerate drying of the ink. The present invention further relates to a method for production of such heat-roller. More particularly, the present invention relates to a direct-heating-type heat-roller for fixing, consisting essentially of electrically conductive ceramic which exhibits improved mechanical strength at room temperature and improved temperature-distribution characteristics during operation, as well as to a method for producing such heat-roller.

2. Description of Related Art

Generally, in an electrophotographic system such as a copying machine, a facsimile, a printer and the like, a toner image must be transferred from the photosensitive drum of a developing device onto paper and be thermally fixed on the paper by means of interlocking the toner particles on the fibers of the paper.

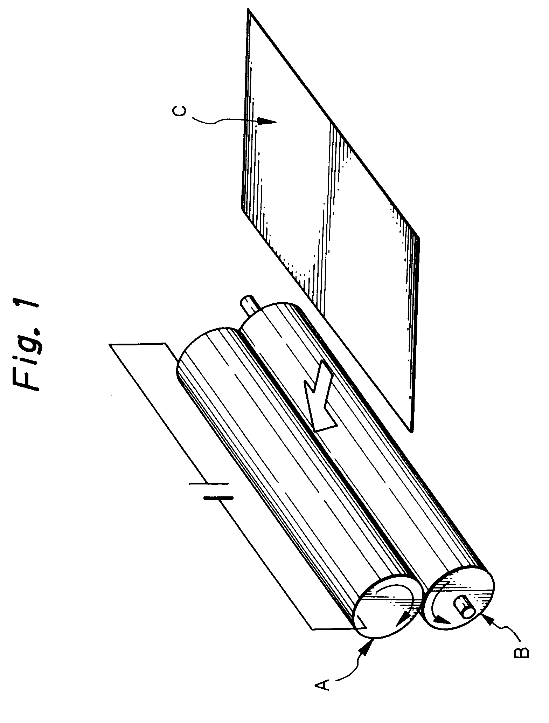

Referring to Figure 1, one type of the fixing unit is illustrated. The fixing unit comprises a heat-roller A heated by a heat source and a back-up roller B coated with heat-resistant resin over the surface. The heat-roller A and the back-up roller B are faced to and brought into contact with one another. A sheet of the paper C, on which the transferred toner image is fixed, is caused to pass through between the heat-roller A and the back-up roller B.

Most generally, the heat-roller A is an indirect heating type, that is, a heat source, such as an infra-red lamp, halogen-lamp or the like, is provided coaxially in a highly heat-conductive metal sleeve of the roller. The fixing unit with the indirect-heating type heat-roller is very costly, because a thin tubular lamp, which is expensive, must be mounted in the metal sleeve, and, further, the metal sleeve must have a thick wall and be very smoothly surface-finished. Furthermore, the indirect-heating type heat-roller cannot be operated until after a lapse of 3 to 10 minutes after input of the electric power, although this time depends on the input amount of electric power. Even during periods of non-operation, the electric power must be kept on for standby. Alternatively, the temperature of such heat-roller is kept at about 100°C so as to enable instantaneous start of operation. Although this method is referred to as the "sleep mode", it entails wasteful consumption of electric power which is considered to be serious from the point of view of the recent energy saving trend in office automation machines.

According to a recently used controlling system, the electric power into the heat-roller is automatically shut off, when the non-operating time lasts for a certain period. Although the energy problem can thus be solved, a standby period of from 3 to 10 minutes is required after re-inputting of electric power, and the user-friendliness of office automation machines is therefore diminished.

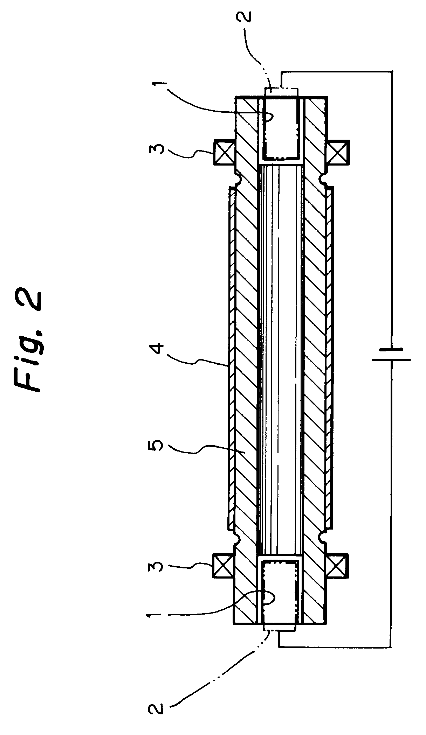

Several fixing units have been placed on the market or are under consideration for the purpose of solving the problems as described above. According to one of them, a rod heater is brought into contact with the toner via a rotating thin film. According to another heat-roller, electrically conductive material is applied on the surface of a cylindrical insulating body and is used as the heat-generating layer. According to a further heat-roller, a pipe 5 shown in Fig. 2 consists of electrically conductive ceramics as a whole. Thus, the pipe 5 is heated directly and is of a self-heat-generating type. In Fig. 2, reference numeral 1 denotes the low-resistance parts (flame-sprayed aluminum layer), reference numeral 2 denotes electrically conductive terminals connected to an electric power source via the low-resistance parts 1, reference number 3 denotes a bearing, and reference number 4 denotes heat-resistant resin.

Various compositions of the electrically conductive ceramics are known. For example, in Japanese Unexamined Patent Publication No. 52-32596, such electrically conductive materials as metal, carbon, and nitride, boride and silicide of metals are mixed in a ceramic phase having a low thermal expansion property.

In Japanese Unexamined Patent Publications No. 63-307682 and No. 1-226765, Si and FeSi are used as the electrically conductive material which is mixed in an insulating ceramic matrix mainly composed of alumino-silicate. It is described that this electrically conductive ceramic composite exhibits resistivity of from $10^{-2}$ to $10^{1}\Omega$cm, and emits far-infrared rays having wavelength in the range of from 3 to 30 $\mu$m at a temperature up to 600°C and, exhibits bending strength in the range of from 700 to 1000 kg/cm$^2$ according to the bending test stipulated under JIS-R1601. The above Unexamined Patent Publications merely describe that the ceramic composite can be effectively utilized in baking of paint, heat-treating of food, drying and baking of organic material, removal of water and the like, but do not specifically refer to the heat-roller for toner fixing in an electrophotographic system such as a copying machine, a facsimile, a printer and the like. Description in the above Unexamined Publications is exclusively limited to the far-infrared radiation and there is no reference to the heat-roller because the severe temperature distribution, appropriate surface condition and strength required for the heat-roller are not described in these publications.

The fixing condition with the use of a heat-roller is conventionally 180°C with the admissible temperature distribution of ±20°C. Recently, this temperature has been lowered to 165°C and even to 145°C since the toner has been modified along with the trend toward low-temperature fixing. Since the toner has become more temperature-sensitive, the admissible temperature distribution of a heat-roller must be ±10°C or less, so as to prevent the so-called offset, which is a deposition phenomenon of the toner on the heat-roller. The temperature distribution characteristics of a heat-roller must therefore be improved. The toner has been modified not only to meet the low-temperature fixing but also quality enhancement of the image. That is, the particle diameter of the toner has conventionally been at the level of 11 μm and has recently been decreased to 9 μm and 7 μm. Since the toner particles with a small particle diameter are significantly melted even under slightly excessive heat, the problem of offset is thereby incurred. The temperature-distribution characteristics of a heat-roller become, therefore, more important as the particle size of toner becomes finer.

From the viewpoint of the surface condition of a heat-roller, heat-resistant resin for preventing the offset such as polytetrafluoroethylene and silicone rubber applied on the surface of heat-roller can improve the surface condition. However, when the material of a heat-roller has pin holes 50 μm or more in diameter before the resin coating, pin-holes are formed on the resin coating covering the pin holes of the heat-roller. The toner may penetrate into the pin holes of the resin coating, thereby incurring the problem of offset.

It is necessary in the direct-heating type heat-roller to control its resistance to a certain level. From this point of view, a composite material of insulating ceramics and electrically conductive material is advisable. Heretofore, developments have not been made to provide electrically conductive ceramic composite, which exhibits the properties required for a direct-heating type heat-roller, particularly short starting-up time which leads to the user-friendliness of office automation machines.

## SUMMARY OF INVENTION

It is therefore an object of the present invention to provide an electrically conductive ceramics suited for a direct-heating type heat-roller, which exhibits satisfactory mechanical strength, is free of pin-holes on the surface or has pin holes of small diameter, if any, and also exhibits improved temperature-distribution characteristics, thereby contributing to the energy saving of office automation machines.

It is another object of the present invention to provide a method for producing a direct-heating type heat-roller.

First, consideration of the mechanical properties by the present inventors is described.

Generally, the mechanical strength $\alpha_f$ of the ceramics is expressed by the following formula.

$$\alpha_f = K_c/Y(a)^{1/2}$$

Here, $K_c$ is the fracture toughness, a is the size of a defect-inducing fracture, and Y is the geometrical constant. The mechanical strength can be enhanced by means of increasing the fracture toughness and reducing the size of defects inducing fracture. The surface flaw, which exerts influence upon the size of defect, can be controlled to various degrees by means of machining. In the case of grinding, the surface flaw can be variously controlled by diamond grain size of a wheel, depth of cut and grinding speed. This control can provide a desired surface condition, independently on the microstructure of the bulk material. Microstructure of the bulk material, such as grain diameter and porosity of the material, also exerts influence upon the size of defects. Therefore, refining of the bulk-material structure leads to decreasing the size of the defect-inducing fracture.

Next, consideration by the present inventors is described as to how the temperature rises when the ceramics is subjected to resistance heating.

When current is conducted through an electrically conductive ceramic pipe of an infinite length to elevate its temperature, the temperature of a pipe in its minute region is expressed by

$$T=(i^2R-Q_0)/cw + T_0$$

Here, i, R, $Q_0$, c, and w indicate current, resistance, heat-radiating amount, specific heat, and weight in a minute region, respectively. $T_0$ indicates room temperature. The above formula indicates therefore that, in order to attain uniform temperature distribution, the current, resistance, heat-radiating amount, specific heat, and weight must be constant in every minute region of the pipe. This in turn first indicates that a pipe should have a uniform cross section and homogeneous microstructure. Since the electrically conductive ceramics exhibits conduction through the contact of the electrically conductive particles, the resistance R in a minute region seems to be greatly influenced by the contact interface between such particles, microscopically speaking. In addition, morphology of pores, which are permissible under the first indication mentioned above, seems to exert influence on the contact interface between the electrically conductive particles. More specifically, when even minute pores are contiguous, conduction failure would occur locally, so that the uniformity in temperature distribution may be impaired. Contiguous pores must be avoided from the viewpoint of uniform temperature distribution.

Based on the considerations as described above, the present inventors selected among various component systems of electrically conductive ceramics a composite material of insulating ceramics and silicon. The present inventors conceived the following features. Even if pores are present in the composite material, if they are equiaxed and isolate and have average particle diameter of 20 μm or less, more preferably 10 μm or less, they do not exert significant influence upon the contact interface of the silicon particles, i.e., the electrically conductive material. When the starting powder of insulating ceramics and silicon particles having average particle diameter of 20 μm or less are fired, the so-produced direct heating type heat-roller has satisfactory mechanical strength, is free from detrimental defect on the surface, and exhibits improved temperature-distribution characteristics. The "equiaxed" indicates herein that there is essentially no elongated orientation in the pores in any optional direction in a ceramic body. In addition, the "isolate" indicates herein that any one of the equiaxed pores is not contiguous to another equiaxed pore.

In accordance with the objects of the present invention, there is provided a direct-heating type heat-roller for fixing, consisting essentially of ceramic composite which essentially consists of insulating ceramics and Si particles of 90% or high purity, said Si particles amounting to from 10 to 40% by volume of the entire ceramic composite, and which may contain equiaxed and isolate pores of average diameter of 20 μm or less under an optical microscope observation. The purity of Si particles is in terms of mass percentage.

The insulating ceramics may be any ceramics having $10^8 \Omega$ cm or more of resistivity at room temperature, hence belonging to the so-called insulating ceramics. Preferably, such insulating oxide ceramics as alumina ($Al_2O_3$), silica ($SiO_2$), magnesia (MgO), mullite ($Al_6Si_2O_{13}$), spinel ($MgAl_2O_4$), and cordierite ($Mg_2Al_4Si_5O_{18}$), insulating nitride ceramics as silicon nitride ($Si_3N_4$) and aluminum nitride (AlN), boron nitride (BN) as well as a mixture of such compounds can be used. A clay, such as kaoline, bentonite and the like and/or a glass such as boro-silicate glass may be added to the above so as to enable sintering of the composite material at a temperature lower than the melting point of silicon, i.e. , 1420°C, of which the composite material is comprised. Evidently, the clay and glass have insulating properties.

A method for producing the direct-heating type heat roller of the present invention is characterized by the following steps. The starting powder, which comprises (a) silicon powder of 90% or higher purity and average particle diameter of 20 μm or less, (b) insulating ceramics having an average particle diameter of 20 μm or less, and (c) clay and/or a glass having an average particle diameter of 20 μm or less, are first prepared. These average particle diameters are selected so as to obtain as dense a sintered product as possible. Water, and if necessary an appropriate organic binder, is added to the starting powder, followed by mixing. The resultant mixture is shaped by an appropriate method, such as extruding, to a roller shape of the desired size, followed by drying. The resultant shaped mixture is then fired at a temperature of from 1200 to 1400°C in a non-oxidizing atmosphere, such as a nitrogen or argon atmosphere.

The resultant ceramic roller is then subjected to grinding of the outer surface and to flame-spraying of aluminum on both ends for forming electrodes. The ground outer surface is then subjected to coating of a heat-resistant resin. This resin coating is selected from materials having good adherence with the ceramic material and good heat conductivity and which is capable of preventing deposition of toner on the heat-roller. For example, tetrafluotoethylene of silicone rubber is applied on the predetermined outer surface of a ceramic roller so as to improve the adhesion with the paper and to enhance the thermal fixing effect.

The present invention is hereinafter described with reference to preferred embodiments and drawings.

BRIEF DESCRIPTION OF DRAWINGS

Figure 1 schematically illustrates the fixing unit.
Figure 2 is a cross sectional view of a direct-heating type heat-roller in the axial direction.

DESCRIPTION OF PREFERRED EMBODIMENTS

The electrically conductive material used in the present invention is Si powder, whose average particle diameter is 20 μm or less. When the average particle diameter is more than 20 μm, the defects, pores and the like in the sintered ceramics are of such large size that neither strength nor surface condition is sufficient for the heat roller. The purity of Si powder used in the present invention is 90% or more, because at less than this purity its melting point is so lowered that it melts at a firing temperature in the range of from 1200 to 1400°C required for sintering the insulating ceramics. When the Si powder melts, the coarse, globular and isolate Si particles are dispersed in the ceramics, whose resistivity is too high to provide electric conductivity appropriate for a heat-roller. Preferably, the Si powder has average particle diameter of 10 μm or less and purity of 95% or more.

The insulating ceramics, which form the matrix of the electrically conductive ceramics according to the present invention, can be oxide ceramics as alumina ($Al_2O_3$), silica ($SiO_2$) magnesia (MgO), mullite ($Al_6Si_2O_{13}$), spinel ($MgAl_2O_4$), and cordierite ($Mg_2Al_4Si_5O_{18}$), nitride ceramics as silicon nitride ($Si_3N_4$) and aluminum nitride (AlN), boron nitride (BN), or a mixture of them. Clay and/or a glass can be added to the above insulating ceramics so as to enable densification of the sintered product at a firing temperature of 1400°C or less. The average particle diameter of the starting powder of the insulating ceramics, clay and glass is 20 μm or less, because above this size, the defects, pores and the like in the sintered ceramics are of such large size that neither strength nor surface condition is sufficient for the heat roller. Preferably, the average particle size of the starting powder is 10 μm or less.

Mixing proportion of the respective components is as follows. With the proviso that the total of the Si particles and the insulating ceramics including clay and/or glass is 100% by volume, the proportion of Si particles is from 10 to 40% by volume. When the proportion of Si particles is less than 10% by volume, the resistivity of the resultant ceramics is too high to provide electric conductivity of a heat-roller. On the other hand, when the proportion of Si particles is more than 40% by volume, the resistivity of the resultant ceramics is too low to provide appropriate resistance heat for a heat-roller.

The electrically conductive ceramics having 10 kg/mm$^2$ or more of average bending strength and 50 μm at the largest of the diameter of pores present on the surface of ceramics can be produced by means of adjusting the purity and particle diameter of the Si particles, the kind of insulating ceramics, and the diameter of pores to the preferred values described above. Similarly, the surface temperature of a heat-roller so produced can be controlled to the specified fixing temperature ± 10°C, preferably ± 5°C. That is, the surface-temperature distribution on a heat-roller varies within ± 10°C, preferably ± 5°C of the fixing temperature.

The method for producing an electrically conductive ceramic heat-roller according to the present invention is now described.

The Si particles and the insulating ceramics of the above specified starting material are first weighed to provide a predetermined amount. Water, and, if necessary, an appropriate binder such as clay, is added to this starting material, followed by mixing. Mixing by means of for example a kneader is carried out thoroughly, for example 15 minutes or longer. After mixing, curing is preferably carried out for a certain time, for example 48 hours or longer, in a sealed atmosphere, while preventing drying, so that the water be thoroughly absorbed in the binder such as clay. In the case where the binder added is organic, the shaped body should be subjected to binder removal, before the firing, by means of heating the body in a non-oxidizing atmosphere. The firing atmosphere must be non-oxidizing, because an oxidizing atmosphere results in oxidation of the Si particles and hence the electric conductivity is not attained. In addition, densification does not occur.

The firing at a temperature lower than 1200°C does not attain densification of the ceramic composite. On the other hand, when the firing temperature is more than 1400°C, the Si particles melt during the firing, so that the electric conductivity becomes inappropriate for a heat-roller.

The outer surface of the pipe 5 (Fig. 2), which is the electrically conductive ceramic produced by the above described method, is subjected to grinding to obtain roughness preferably from 2 to 7 μm. Aluminum is then flame-sprayed on the inner surface of the pipe 5 at both ends so as to form the low-resistance parts 1. The heat-resistant resin 4 is applied on the outer surface of pipe 5. The heat-resistant resin 4 is, for example, tetrafluoroethylene, silicone rubber or the like.

The present invention is herein after described by way of examples.

Example 1 (J1)

The prepared starting materials were Si powder having 96% purity and average particle diameter of 7.4 μm, Al$_2$O$_3$ powder having average particle diameter of 5 μm, Kibushi clay having average particle diameter of 8 μm, bentonite (product of Wyoming) having average particle diameter of 14 μm, and boro-silicate glass having average particle diameter of 4 μm. The Si powder in 33% by volume, the Al$_2$O$_3$ powder in 37% by volume, the Kibushi clay in 10% by volume, the bentonite in 10% by volume and the boro-silicate glass in 10% by volume were mixed to provide a powder mixture. This was then mixed by a kneader first in a dry manner for 10 minutes and then mixed for 20 minutes with the addition of 20 parts by weight of water based on 100 parts by weight of the powder mixture.

The resultant mixture was cured for 3 days and then shaped into a pipe by an extruder, followed by drying. Firing was then carried out at 1300°C for 1 hour in an Ar atmosphere. As a result, a sintered product in the form of a pipe 31mm in outer diameter, 23mm in inner diameter, and 720mm in length was obtained. The aluminum flame-spraying was applied on the sintered product on both ends and the inner surface to a length of 10mm from each end, so as to form the electrodes. The outer surface of the pipe was finished by grinding. The outer diameter after grinding was 30mm. A tetrafluoro-ethylene coating was formed on the central 660mm region of the outer surface. An inventive heat-roller was thus completed. Its resistance was 8.5Ω.

Electric power of 1kW was input into the heat-roller. Temperature-rise time was measured. The temperature rose to 180°C in 55 seconds. The temperature at 30mm intervals of the heat-roller was measured. The obtained temperature distribution was as follows.

Position 1 - 176.4°C; Position 2 - 177.6°C;
Position 3 - 178.3°C; Position 4 - 178.1°C;
Position 4 - 178.1°C; Position 2 - 178.6°C;

Position 5 - 178.6°C; Position 6 - 180.1°C;
Position 7 - 180.6°C; Position 8 - 180.8°C;
Position 9 - 181.3°C; Position 10- 181 °C;
Position 11- 180.9°C; Position 12- 180.7°C;
Position 12- 180.7°C; Position 13- 180 °C;
Position 14- 180 °C; Position 15- 179.5°C;
Position 16- 178.3°C; Position 17- 177.7°C;
Position 18- 177.1°C; Position 19- 175.3°C;

The temperature distribution is thus 6°C at the greatest and is satisfactory as a heat-roller.

Samples 2.5 x 4 x 13mm in size were cut from the inventive heat-roller and were subjected to the three-point bending test under the conditions of 10mm of span and 0.5mm/min of cross-head speed. The bending strength obtained as a result of the test was from 10.3 to 15.0kg/mm$^2$ (average strength - 12.5kg/mm$^2$, Weibull modulus - 11.3).

Pores were detected under an optical microscope observation. Size of the pores was 7 μm in average particle diameter. Pores were isolate and equiaxed. Size of the largest pin holes on the surface was 15 μm.

Example 2 (J2)

The same process as in Example 1 was repeated except that: the insulating ceramics used was mullite having 12 μm of average particle diameter, and the mixing proportion and the size of the heat-roller were as follows. Mullite - 15% by volume, Kibushi clay - 35% by volume, Wyoming bentonite - 15% by volume, borosilicate glass - 10% by volume, and Si - 25% by volume. The heat-roller was 25mm in outer diameter, 19mm in inner diameter and 246mm in length. The resitance of the heat-roller was 18Ω.

Electric power of 800W was input into the heat-roller. Temperature-rise time was measured. The temperature rose to 160°C in 16 seconds. The temperature at 30mm intervals of the heat-roller was measured. The obtained temperature distribution was as follows.

Position 1 - 162.5°C; Position 2 - 163.3°C;
Position 3 - 164.0°C; Position 4 - 164.9°C;
Position 5 - 164.7°C; Position 6 - 164.1°C;
Position 7 - 163.0°C

The temperature distribution is thus 2.4°C at the greatest.

Pores were detected under an optical microscope observation (magnification - 400 times). Size of the pores was 10μm in average particle diameter. Pores were isolate and equiaxed. Size of the largest pin holes on the surface was 13 μm.

Comparative Example 1 (H1)

For comparison purpose, the material of a heat-roller was produced by the method of Example 1 except that, instead of the Si powder, Fe-Si powder having 75% of Si purity and 7.5 μm of average particle diameter was used. The obtained material had excessively high resistance (~MΩ) so that it did not function as a heater.

Comparative Example 2 (H2)

For comparison purpose, the material of a heat-roller was produced by the method of Example 2 except that the Si particles used, instead of the one in Example 2, had 92% of purity and 23 μm of average particle diameter. The bending test as carried out in Example 1 revealed from 7.5 to 8.4kg/mm$^2$ (7.9kg/mm$^2$ in average). Roughness was so high that pin-holes were left in the tetrafluoroethylene coating. The fixing property was detrimentally influenced by the pin-holes.

Pores detected under an optical microscope observation were isolate and equiaxed. The morphology of the pores had therefore an inventive feature. The average particle diameter of the pores was 25 μm. Size of the largest pin-holes on the surface was 60μm in diameter.

Examples 3 - 9 (J3 - J9)

Instead of alumina and mullite used in Examples 1 and 2, respectively, silica, magnesia, spinel, cordierite, silicon nitride, aluminum nitride and boron nitride were used as the insulating ceramics. Their mixing proportion is shown in Table 2. Heat rollers were produced by the method of Example 1. However, since an organic binder was used in these examples, the shaped body was subjected, prior to firing, to the binder removal at 450°C for 1 hour.

As in Example 1, the property values were measured with regard to resistance, temperature distribution (temperature width = $T_{max}$ - $T_{min}$), strength, diameter of pin-holes on the surface, and temperature-rise time. The results are shown in Table 3.

Table 2

| | | Insulating Ceramics | | | Si (%) | Binder: Methyl Cellulose (wt parts) | Water (wt parts) |
|---|---|---|---|---|---|---|---|
| | Material | Average Particle Diameter (um) | Amount (%) | Borosilicate glass (%) | | | |
| J3 | Silica | 16 | 57 | 10 | 33 | 6.5 | 13.5 |
| J4 | Magnesia | 12 | 57 | 10 | 33 | 6.5 | 13.5 |
| J5 | Spinel | 9 | 47 | 20 | 33 | 7.0 | 14.0 |
| J6 | Cordierite | 18 | 57 | 10 | 33 | 6.0 | 13.0 |
| J7 | Silicon nitride | 6 | 47 | 20 | 33 | 7.5 | 14.5 |
| J8 | Aluminum nitride | 3 | 47 | 20 | 33 | 8.5 | 16.0 |
| J9 | Boron nitride | 8 | 47 | 20 | 33 | 7.5 | 14.5 |

Remarks: the boro-silicate glass is 4 $\mu$m in size.

Pores were detected under an optical microscope observation. Size of the pores was 20 $\mu$m or less in average particle diameter. Pores were isolate and equiaxed. Size of the largest pin holes on the surface was 50 $\mu$m or less. The measured properties of the heat rollers are shown in Table 3.

Table 3

| No. | Resistance ($\Omega$) | Temperature Distribution (°C) | Bending Strength (kg/mm$^2$) | Diameter of Pin-Holes ($\mu$m) | Temperature Rise Time (second) |
|---|---|---|---|---|---|
| J3 | 8 2 | 8 | 12.2 | 34 | 65 |
| J4 | 8.4 | 4 | 10.5 | 24 | 48 |
| J5 | 8.2 | 7 | 11.3 | 15 | 55 |
| J6 | 8.5 | 10 | 10.2 | 38 | 61 |
| J7 | 8.0 | 5 | 15.4 | 10 | 50 |
| J8 | 8.1 | 4 | 13.3 | 7 | 45 |
| J9 | 8.4 | 5 | 9.6 | 18 | 56 |

Examples 10 - 11 (J10 - J11) and Comparative Example 3 (H3)

The same method as in Example 2 was repeated except that, instead of the Kibushi clay used in Example 2, Kasaoka clay and gaerome clay were used. Since the average particle diameter of available raw material powder (H3) was more than 20 $\mu$m, the powder was pulverized to 20 $\mu$m or less in average particle diameter (J11). The results are shown in Table 4.

Examples 12 - 13 (J12 - J13) and Comparative Examples 4- 6 (H4 - H6)

The method of Example 1 was repeated except that firing conditions were changed as shown in Table 5. The measured properties of the heat rollers are shown in Table 5. The pores of examples 12 and 13 observed by an optical microscope were equiaxed and smaller than 20 μm, while the pores of the Comparative Example 5 were not isolated but contiguous.

Table 4

| | Clay | | Heat-Roller | | | | | |
|---|---|---|---|---|---|---|---|---|
| No. | Name | Particle Diameter in Average (μm) | Resistance (Ω) | Temperature Distribution (°C) | Strength (kg/mm$^2$) | Diameter of Pin Holes (μm) | Temperature Rise Time (second) | Pores Diameter in average (μm) |
| J10 | Kasaoka | 9 | 18.5 | 4 | 13.0 | 19 | 15 | 8 |
| H3 | Gaerome | 140 | 24.3 | 18 | 6.8 | 120 | 10 | 55 |
| J11 | Gaerome | 18 | 19.5 | 8 | 10.2 | 32 | 18 | 14 |

Table 5

| No. | Firing Condition | | | Heat-Roller | | | | |
|---|---|---|---|---|---|---|---|---|
| | Temperature (°C) | Firing Time (hrs) | Atmosphere | Resistance (Ω) | Temperature Distribution (°C) | Strength (kg/mm$^2$) | Diameter of Pin-Holes (μm) | Temperature Rise Time (second) |
| J12 | 1250 | 1 | $N_2$ | 8.6 | 7 | 12.7 | 16 | 55 |
| H4 | 1300 | 1 | air | M | - | 3.7 | 180 | - |
| J13 | 1350 | 1 | $N_2$ | 8.2 | 6 | 13.3 | 20 | 53 |
| H5 | 1150 | 1 | Ar | 9.8 | 28 | 5.5 | 86 | 56 |
| H6 | 1450 | 1 | Ar | M | - | 8.5 | 44 | - |

## Claims

1. A direct-heating type heat-roller for fixing, consisting essentially of a composite ceramics (5) which essentially consists of insulating ceramics and Si particles having 90% or more of purity, said Si particles amounting to from 10 to 40% by volume of the entire composite ceramics, and which may contain equiaxed isolate pores under an optical microscope observation having 20 μm or less of average diameter.

2. A direct-heating type heat-roller for fixing according to claim 1, wherein said insulating ceramics is at least one compound selected from a group consisting of alumina ($Al_2O_3$), silica ($SiO_2$), magnesia (MgO), mullite ($Al_6Si_2O_{13}$), spinel ($MgAl_2O_3$), cordierite ($Mg_2Al_4Si_5O_{18}$), silicon nitride ($Si_3N_4$), aluminum nitride (AlN) and boron nitride (BN).

3. A direct-heating type heat-roller for fixing according to claim 1 or 2, wherein said clay is at least one component selected from a group consisting of kaoline, bentonite, Kibushi clay, Gaerome clay and kasaoka clay and said glass is boro-silicate.

4. A direct-heating type heat-roller for fixing according to any one of claims 1 through 3, wherein the average diameter of the pores is 10 μm or less.

5. A direct-heating type heat-roller for fixing according to any one of claims 1 through 4, having a polished cylindrical outer surface, where pin holes on said cylindrical outer surface are 50 μm or less in diameter, and said heat-roller exhibits bending strength of 10 kg/mm$^2$ or more.

6. A method for producing a direct-heating type heat-roller, comprising the steps of:

preparing a powder mixture essentially consisting of (a) Si powder having 20 μm or less of average particle diameter and 90% or more of purity, (b) insulating ceramics powder having 20 μm or less of average particle diameter, and (c) at least one component selected from clay or glass having 20 μm or less of average particle diameter;
shaping said powder mixture; and,
firing said powder mixture at a temperature of from 1200 to 1400°C under a non-oxidizing atmosphere.

Fig. 1

# Fig. 2

**European Patent Office**

# EUROPEAN SEARCH REPORT

Application Number

EP 96 11 3519

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y,D | US-A-5 077 461 (HASEGAWA NOBUYUKI) 31 December 1991<br>* column 1, line 46 - line 48 *<br>* column 2, line 34 - line 39 *<br>* column 4, line 58 - column 5, line 5; claims; figure 1; example * | 1-3,6 | C04B35/01<br>G03G15/20 |
| A | * the whole document *<br>--- | 4,5 | |
| Y | DE-A-38 19 698 (HITACHI METALS LTD) 29 December 1988<br>* claims *<br>--- | 1-3,6 | |
| A | DE-A-35 03 929 (REIMBOLD & STRICK) 7 August 1986<br>--- | | |
| A | EP-A-0 332 105 (HITACHI LTD) 13 September 1989<br>----- | | |
| | | | TECHNICAL FIELDS SEARCHED (Int.Cl.6)<br><br>C04B<br>G03G |

The present search report has been drawn up for all claims

| Place of search | Date of completion of the search | Examiner |
|---|---|---|
| THE HAGUE | 5 December 1996 | Harbron, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)